# EUROPEAN PATENT SPECIFICATION

(11) **EP 1 612 105 B1**
(45) Date of publication and mention of the grant of the patent: **03.09.2008**
(21) Application number: 05103808.1
(22) Date of filing: 09.05.2005
(51) Int. Cl.: B60R 9/045, B60R 9/08

(54) **Load-bearing bracket intended to be mounted on a longitudinal roof rail of a motor vehicle**
Lasttragende Halterung die zur Montage auf einer longitudinalen Dachreling eines Kraftfahrzeugs bestimmt ist
Elément de support destiné à être monté sur un rail de toit longitudinal de véhicule

(30) Priority: 01.07.2004 SE 4017018
(43) Date of publication of application: 04.01.2006
(73) Proprietor: SAAB AUTOMOBILE AB, 461 80 Trollhättan (SE)
(72) Inventor: Frischer, Ivar, 411 25 Göteborg (SE)
(74) Representative: Lind, Urban Arvid Oskar

(56) References cited:
- DE-C2- 4 328 852
- US-A- 5 779 116

## Description

### Background of the invention

### 1. Technical field

The present invention relates to a load-bearing bracket according to the preamble of claim 1, intended to be mounted on a longitudinal roof rail of a motor vehicle and suitable for transporting a small number of long objects.

### 2. Related art

Longitudinal roof rails fixed in position are often found on cars of the estate type or of the so-called SUV type for the purpose of supporting transverse loading frames which are in turn fixed with their ends in the roof rails in order to support various types of loads. Such loading frames are used to transport relatively large and bulky objects. Even for transporting a small number of long, relatively lightweight objects, such as pipes, boards and the like, it is necessary to mount transverse loading frames which are fixed on the two roof rails.

US-A-5 779 116 describes load-bearing brackets which comprise two or more arms connected to one another in a hinged manner, each with a cantilever arm with a load-bearing surface. On account of its construction, this bracket, designed as a clamp, has a two-part loading surface which is located high above the rail and is separated by a high projecting and obstructing central part which contains the actual hinge between the arms.

It is an object of the present invention to propose a load-bearing bracket which, without the need for bulky loading frames to be mounted on both sides, is suitable for transporting a small number of lightweight, long objects and which can be fixed in pairs on the same roof rail. The load-bearing bracket must be of simple construction, have a small number of parts, be able to be mounted quickly on the rail and have a load-bearing surface which can extend transversely across the rail and very close to the latter. For this purpose, the bracket according to the invention is distinguished by the features set out in claim 1. A bracket of this type for a small load consisting of long objects can simply be pressed securely onto the roof rail and anchored firmly thereon with the aid of a suitable quick-acting lock.

Further features and advantages of the bracket according to the invention are set out in the independent patent claims and will become clear from the following detailed description with reference to the attached drawing.

### Brief description of the drawing

Fig. 1 is a perspective view of a first, asymmetrical embodiment of a load-bearing bracket according to the invention, mounted on a roof rail;
Fig. 2 shows an end view of the bracket in Fig. 1; and
Fig. 3 is an end view of a second, symmetrical embodiment of the bracket according to the invention.

### Detailed description of preferred embodiments

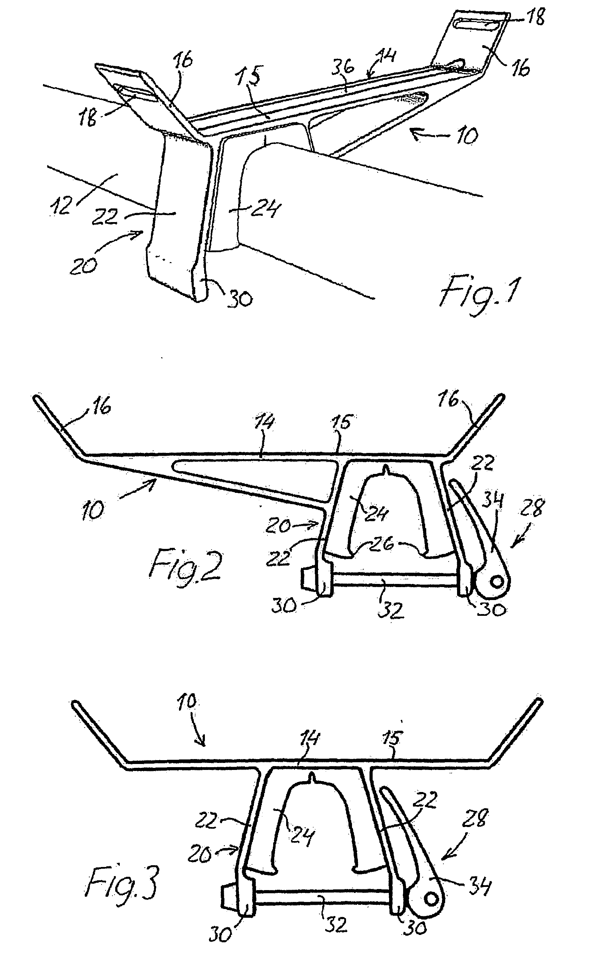

Figures 1 and 2 show a first embodiment of a load-bearing bracket 10 according to the invention. The bracket 10 is intended to be mounted on a longitudinal roof rail 12 of a motor vehicle and, together with at least one further bracket 10 mounted on the same roof rail 12, to support a small number of long objects such as pipes, individual boards and the like (not shown). The bracket 10 for this purpose comprises a load-supporting bar 14 which at its end portions preferably has upwardly projecting flanges 16 with some suitable form of fastening means, for example slits 18, for load-fastening means, for example retaining straps, for securing the objects which are to be transported. Arranged on the underside of the bar 14 there is an anchoring means 20 for anchoring the bracket 10 on the roof rail 12. The anchoring means 20 comprises a pair of resilient legs 22 which project downwards from the underside of the bar 14 and which are designed such that, when mounted on the roof rail 12, they straddle the latter and are anchored thereon. The bar 14 and the anchoring legs 22 are formed in one piece, for example by extrusion of metal or a suitably strong plastic material.

The anchoring means 20 also preferably comprises an element 24 which is adapted to the cross-sectional profile of the roof rail 12 and is arranged between the legs 22 and the roof rail 12. The element 24 can be formed as a separate, exchangeable adapter part which can be adapted in shape to the profile of the actual rail, with the result that the bracket 10 can be used on the roof rails of different vehicles. Alternatively, the element 24 can from the outset be fixedly joined to the legs 22 and adapted to a specific rail profile.

The element 24 can have a substantially U-shaped cross-sectional profile with inwardly directed shoulders 26 at the ends so that, when mounted on the roof rail 12, they are able to spring outwards and snap in against the underside of said rail. The outer configuration of the element 24 is adapted to that of the inside of the legs 22. There can be a form-fit connection (not shown) between the legs 22 and the element 24 in order to hold these parts together before and after mounting on the roof rail 12. To anchor the bracket 10 securely and forcibly on the roof rail 12, the anchoring means 20 also comprises a suitable locking element 28 (Figures 2 and 3) which joins the free end portions 30 of the legs 22 and, after placement of the bracket 10 on the rail 12, can press the legs 22, and thus the arms of the adapter element 24, firmly against the rail 12. The locking element 28 can comprise a pull rod 32 which releasably connects the end portions 30, and an eccentric arm 34 or the like for fixing the legs 22 and the adapter element 24 in a braced position.

In the asymmetrical embodiment according to Fig. 1, the load-bearing bar 14 of the bracket 10 extends out sideways from the anchoring means 20 as a cantilever support. The bracket 10 is designed to be inverted so that it can be mounted facing in towards or out from the roof rail 12 on the vehicle. In the embodiment according to Fig. 3, the bar 14 is arranged symmetrically in relation to the anchoring means 20 and projects as a cantilever support by the same distance in opposite directions. In both cases, the bar 14 has a lead-bearing surface 15 which extends transversely across the roof rail 12 and very close to the latter for increased stability of the supported load.

On the load-bearing surface 15 of the bar 14, a longitudinal, load-bearing elevation 36 (Fig. 1) can be arranged to compensate for any inclination of the bracket 10 caused by sloping of the roof rail 12 in its longitudinal direction.

## Claims

1. Load-bearing bracket, intended to be mounted on a longitudinal roof rail (12) of a motor vehicle, comprising a load-supporting bar (14) which is substantially horizontal in the position of use, is directed transversely with respect to the roof rail and, at its end portions (16), has attachments (18) for load-fastening means and, on its underside, has an anchoring means (20) with a pair of downwardly projecting legs (22) which are designed so that, when mounted on the roof rail (12), they are anchored thereon, **characterized in that** the bar (14) and the downwardly projecting legs (22) are formed in one piece in such a way that the legs (22) have a resiliency relative to the bar (14) so that they can straddle and snap onto the roof rail (12) in order to provide a load-bearing surface (15) of the bar (14) extending transversely across the roof rail (12).

2. Bracket according to Claim 1, **characterized in that** the bar (14) extends as a cantilever support in one direction from the anchoring means (20) of the bracket.

3. Bracket according to Claim 1, **characterized in that** the bar (14) extends as a cantilever support in two opposite directions from the anchoring means (20) of the bracket.

4. Bracket according to any of Claims 1-3, **characterized in that** the anchoring means (20) comprises a substantially U-shaped adapter element (24) which can be clamped securely against the roof rail (12) and which has a contact surface adapted to the cross-sectional profile of the actual roof rail (12).

5. Bracket according to Claim 4, **characterized in that** the adapter element (24) has resilient side arms designed to be snapped onto and grip around a substantial part of the perimeter of the roof rail (12).

6. Bracket according to Claim 5, **characterized in that** the legs (22) of the anchoring means can be connected with a form-fit to the outside of the arms of the adapter element (24).

## Patentansprüche

1. Zur Montage auf eine längs verlaufende Dachreling (12) eines Kraftfahrzeugs bestimmter Lastenhalter mit einer die Last abstützenden Schiene (14), die in der Gebrauchsposition im Wesentlichen waagerecht und bezüglich der Dachreling quer ausgerichtet ist, an ihren Endabschnitten (16) Ansätze (18) für Lastenbefestigungsmittel und an ihrer Unterseite Verankerungsmittel (20) mit einem Paar nach unten vorspringender Schenkel (22) besitzt, die so ausgelegt sind, dass sie, wenn sie auf die Dachreling (12) montiert sind, darauf verankert sind, **dadurch gekennzeichnet, dass** die Schiene (14) und die nach unten vorspringenden Schenkel (22) einteilig so ausgelegt sind, dass die Schenkel (22) eine Elastizität bezüglich der Schiene (14) besitzen, so dass sie über die Dachreling (12) gespreizt und darauf eingerastet werden können, um eine tragende Fläche (15) der Schiene (14) zu schaffen, die sich quer über die Dachreling (12) hinweg erstreckt.

2. Halter nach Anspruch 1, **dadurch gekennzeichnet, dass** die Schiene (14) sich als überhängende Stütze in der einen Richtung von den Verankerungsmitteln (20) des Halters weg erstreckt.

3. Halter nach Anspruch 1, **dadurch gekennzeichnet, dass** die Schiene (14) sich als eine überhängende Stütze in zwei entgegengesetzten Richtungen von den Verankerungsmitteln (20) des Halters weg erstreckt.

4. Halter nach einem der Ansprüche 1 bis 3, **dadurch gekennzeichnet, dass** die Verankerungsmittel (20) ein im Wesentlichen U-förmiges Adapterelement (24) umfassen, das sicher an der Dachreling (12) angeklemmt werden kann und das eine Kontaktfläche besitzt, die dem Querschnittsprofil der konkreten Dachreling (12) angepasst ist.

5. Halter nach Anspruch 4, **dadurch gekennzeichnet, dass** das Adapterelement (24) federnde Seitenarme besitzt, die so ausgelegt sind, dass sie auf einem wesentlichen Teil des Umfangs der Dachreling (12) einrasten und ihn umfassen.

6. Halter nach Anspruch 5, **dadurch gekennzeichnet, dass** die Schenkel (22) der Verankerungsmittel mit einem formschlüssigen Teil an der Aussenseite der Arme des Adapterelements (24) angebracht werden können.

## Revendications

1. Console de support de charge, destiné à être monté sur un longeron de toit longitudinal (12) d'un véhicule automobile, comprenant une barre de support de charge (14) qui est essentiellement horizontale dans la position d'utilisation, est dirigée de manière transversale par rapport au longeron de toit et, dispose, à ses portions d'extrémité (16), d'éléments de fixation (18) pour un moyen de fixation de charge et, dispose, sur son côté de dos, d'un moyen d'ancrage (20) avec une paire de jambes (22) se projetant vers le bas qui sont conçues de telle sorte que, lorsqu'elles sont montées sur le longeron de toit (12), elles sont ancrées sur celui-ci, **caractérisée en ce que** la barre (14) et les jambes (22) se projetant vers le bas sont formées d'un seul tenon de telle manière que les jambes (22) soient élastiques par rapport à la barre (14) afin de pouvoir enjamber et s'emboîter sur le longeron de toit (12) afin de fournir une surface de support de charge (15) de la barre (14) s'étendant de manière transversale à travers le longeron de toit (12).

2. Console selon la revendication 1, **caractérisée en ce que** la barre (14) s'étend comme un support en porte-à-faux dans une direction à partir du moyen d'ancrage (20) de la console.

3. Console selon la revendication 1, **caractérisée en ce que** la barre (14) s'étend comme un support en porte-à-faux dans deux directions opposées à partir du moyen d'ancrage (20) de la console.

4. Console selon l'une quelconque des revendications 1-3, **caractérisée en ce que** le moyen d'ancrage (20) comprend un élément adaptateur (24) essentiellement en forme de U qui peut être fixé de manière sécurisée contre le longeron de toit (12) et qui a une surface de contact adaptée au profil en coupe transversale du longeron de toit (12) effectif.

5. Console selon la revendication 4, **caractérisée en ce que** l'élément adaptateur (24) dispose de bras latéraux élastiques conçus pour être emboîtés sur et s'accrocher autour d'une partie essentielle du périmètre du longeron de toit (12).

6. Console selon la revendication 5, **caractérisée en ce que** les jambes (22) du moyen d'ancrage peuvent être raccordées par le biais d'une liaison de forme à l'extérieur des bras de l'élément adaptateur (24).
